# EUROPÄISCHE PATENTANMELDUNG

(11) **EP 2 286 989 A1**
(43) Veröffentlichungstag der Anmeldung: **23.02.2011**
(21) Anmeldenummer: 09010091.8
(22) Anmeldetag: 05.08.2009
(51) Int. Cl.: B32B 5/18, B32B 15/08, B32B 27/08, B32B 27/40, C08G 18/42, C08G 63/20, C09D 5/00, C09D 167/00, C09D 171/00, C09D 175/00, C09D 183/00

(54) **Verfahren zur Herstellung eines Schaumstoff-Verbundelements**

(71) Anmelder: Bayer MaterialScience AG, 51368 Leverkusen (DE)
(72) Erfinder: Van de Braak, Johannes, 53773 Hennef (DE); Roers, Rolf, Dr., 51519 Odental (DE); Haas, Peter, Dr., 42781 Haan (DE)

(57) **Zusammenfassung**

Die Erfindung betrifft ein Verfahren zur Herstellung eines Schaumstoff Verbundelements, umfassend die Schritte des Bereitstellens einer Deckschicht, des Auftragens einer Polyolverbindung, und des Auftragens einer Polyurethan und/oder Polyisocyanurat umfassenden Schaumstoffschicht auf die Polyolverbindung. Die Erfindung betrifft weiterhin die Verwendung einer Polyolverbindung als Haftvermittler in der Herstellung von Schaumstoff-Verbundelementen sowie durch das erfindungsgemäße Verfahren erhaltene Schaumstoff-Verbundelemente.

## Beschreibung

Die Erfindung betrifft ein Verfahren zur Herstellung eines Schaumstoff-Verbundelements, umfassend die Schritte des Bereitstellens einer Deckschicht, des Auftragens einer Polyolverbindung auf die Deckschicht, und des Auftragens einer Polyurethan und/oder Polyisocyanurat umfassenden Schaumstoffschicht auf die Polyolverbindung. Die Erfindung betrifft weiterhin die Verwendung einer Polyolverbindung als Haftvermittler in der Herstellung von Schaumstoff-Verbundelementen sowie durch das erfindungsgemäße Verfahren erhaltene Schaumstoff-Verbundelemente.

Für die kontinuierliche Fertigung von Metallsandwichelementen auf der Basis von Polyurethan-Hartschaumstoffen, also sowohl Polyurethan- als auch Polyisocyanurat-Hartschaumstoffen, ist die Haftfestigkeit von metallischer Deckschicht zum Schaum wichtig, insbesondere wenn es sich bei dem Schaum um einen Polyisocyanurat-Schaum handelt. Im Markt etabliert sind Zweikomponenten-Polyurethan-Haftvermittlersysteme. Die Haftfestigkeiten durch Einsatz solcher Zweikomponenten-Haftvermittlersysteme werden prinzipiell deutlich verbessert, was für die Hersteller der Fertigteile eine Produktverbesserung bedeutet. Insbesondere werden die Langzeitrisiken für ein Haftungsversagen massiv reduziert.

Allerdings können bei der Verarbeitung solcher Zweikomponenten-Haftvermittlersysteme Schwierigkeiten mit einer ausreichenden Homogenisierung der Haftvermittlerkomponenten auftreten. Eine unzureichende Homogenisierung kann im Hinblick auf die Langzeit-Verbundeigenschaften der Metallverbundelemente ein hohes Risiko bedeuten, und zwar in der Weise, dass es bei wechselnden Temperaturen zu Haftungsversagen von Deckschicht zum Schaum kommen kann. Weiterhin kann die Verarbeitung eines Zweikomponenten-Haftvermittlersystems einen relativ hohen Ausschuss zu Beginn einer Produktionsphase bedeuten.

Zur Vermeidung des Risikos mangelhafter Verbundeigenschaften aufgrund nicht ausreichender Homogenisierung der beiden Haftvermittlerkomponenten bieten sich Einkomponenten-Lösungen an. Beispielsweise offenbart EP 1 516 720 A1 die Verwendung eines Polyurethan-Haftvermittlers zur Verbesserung der Haftung zwischen den Schichten eines Verbundelements, enthaltend einen Polyisocyanurat-Schaumstoff und Deckschichten, sowie die Verbundelemente als solche und ein Verfahren zu ihrer Herstellung.

EP 1 593 438 A2 offenbart eine Vorrichtung und Verfahren zur Herstellung von Sandwich-Verbundelementen. Die Vorrichtung besteht wenigstens aus zwei Zuführvorrichtungen für Deckschichten, an die eine Auftragsvorrichtung für einen Haftvermittler, eine Auftragsvorrichtung für eine Kernschicht, eine Fördervorrichtung und eine Ablenkvorrichtung hintereinander geschaltet sind. Die Auftragsvorrichtung für den Haftvermittler besteht wenigstens aus einer Zuführleitung für den Haftvermittler, einen Drehteller mit mindestens einer seitlichen Austrittsöffnung sowie einem Antrieb für den Drehteller. Als Haftvermittler können Einkomponentensysteme, zum Beispiel auf der Basis von Polyurethan, wie NCO-Gruppen enthaltende Prepolymere, eingesetzt werden. Weitere mögliche Einkomponentensysteme basieren auf Polychloropren, Epoxid oder Polyvinylacetat. Der Haftvermittler kann auch aus einem Mehrkomponentensystem, bevorzugt aus einem Zweikomponentensystem aufgebaut sein. Bevorzugte Zweikomponentensysteme sind Polyurethansysteme.

Eine ständige Aufgabe ist die Verbesserung der Haftung zwischen dem Schaum und den Deckschichten in Schaumstoff-Verbundelementen. Es besteht folglich der Bedarf an alternativen und verbesserten Verfahren zur Herstellung dieser Verbundelemente, die insbesondere eine verbesserte Haftung zwischen dem Schaum und den Deckschichten in Schaumstoff-Verbundelementen bei gleichzeitig geringerem Auftreten von Blasen und/oder Sollbruchstellen ermöglichen.

Erfindungsgemäß vorgeschlagen wird daher ein Verfahren zur Herstellung eines Schaumstoff-Verbundelements, umfassend die Schritte:
A) Bereitstellen einer Deckschicht;
B) Auftragen einer Polyolverbindung auf die Deckschicht, und
C) Auftragen einer Polyurethan und/oder Polyisocyanurat umfassenden Schaumstoffschicht auf die Polyolverbindung.

Es wurde gefunden, dass durch den Einsatz einer Polyolverbindung als Haftvermittler die Haftung des Schaums an der Deckschicht gegenüber bekannten Systemen verbessert werden konnte. Insbesondere ermöglicht die alleinige Verwendung von Polyolverbindungen unzureichende Mischungsverhältnisse beim Einsatz von Zwei-Komponentensystemen zu vermeiden. Unzureichend gemischte Haftvermittlersysteme würden zur Blasenbildung oder zu Sollbruchstellen im Verbundmaterial führen. Vorteilhafterweise ermöglicht die alleinige Verwendung von Polyolverbindungen auch eine ganzflächige Benetzung der Deckschicht.

Die erfindungsgemäß hergestellten Schaumstoff-Verbundelemente eignen sich insbesondere als Wärmedämmelemente.

Schritt A) des erfindungsgemäßen Verfahrens betrifft das Bereitstellen einer Deckschicht. Dieses kann in kontinuierlichen Produktionsanlagen beispielsweise durch Abwickeln einer aufgerollten Deckschicht von einer Rolle geschehen. Die Art der Deckschicht ist zunächst nicht weiter festgelegt, wobei bevorzugt die im Bereich der Wärmeisolierung üblicherweise eingesetzten Materialien für Deckschichten verwendet werden können. Die Dicke der Deckschicht kann beispielsweise ≥ 200 µm bis ≤ 5 mm, bevorzugt ≥ 300 µm bis ≤ 2 mm und besonders bevorzugt ≥ 400 µm bis ≤ 1 mm betragen.

In Schritt B) wird eine Polyolverbindung auf eine bereitgestellte Deckschicht aufgetragen. Das Auftragen kann mit üblichen Techniken wie beispielsweise Aufsprühen oder Rollen erfolgen.

Bevorzugt weist die Polyolverbindung eine Funktionalität von 2 bis 8, besonders bevorzugt von von 2 bis 4, ganz besonders bevorzugt von 2 oder 3.

Bevorzugt weist die Polyolverbindung eine Hydroxylzahl im Bereich von 15 bis 500, besonders bevorzugt von 20 bis 200 ganz besonders bevorzugt von 20 bis 60 auf.

Bevorzugt wird die Polyolverbindung ausgewählt aus der Gruppe bestehend aus Polyesterpolyolen, Polyetherpolyolen und Polymerpolyolen.

Bevorzugt weist die Polyolverbindung eine Viskosität gemessen nach DIN 53015 bei einer Temperatur von 25 °C im Bereich zwischen 200 und 30000 mPa.s, besonders bevorzugt im Bereich zwischen 200 und 20000 mPa.s, ganz besonders bevorzugt im Bereich zwischen 200 und 10000 mPa.s, auf.

Erfindungsgemäß bevorzugte Polyesterpolyole werden insbesondere aus organischen Dicarbonsäuren mit 2 bis 12 Kohlenstoffatomen, vorzugsweise aliphatische Dicarbonsäuren mit 4 bis 6 Kohlenstoffatomen und mehrwertigen Alkoholen vorzugsweise Alkandiolen mit 2 bis 12 Kohlenstoffatomen, vorzugsweise 2 bis 6 Kohlenstoffatomen, Dialkylenglykolen und/oder Alkantriolen mit 3 bis 6 Kohlenstoffatomen hergestellt. Erfindungsgemäß eingesetzte Dicarbonsäuren werden bevorzugt ausgewählt aus der Gruppe bestehend aus Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch verwendet werden. Anstelle der Dicarbonsäuren können auch die entsprechenden Carbonsäurederivate wie beispielsweise Dicarbonsäureester von Alkoholen mit 1 bis 4 Kohlenstoffatomen oder Dicarbonsäureanhydride eingesetzt werden. Als zwei und mehrwertige Alkohole, insbesondere Alkandiole und Dialkylenglykole können erfindungsgemäß Verbindungen eingesetzt werden aus der Gruppe bestehend aus Ethandiol, Diethylenglykol, 1,2- bzw. 1,3-Propandiol, Dipropylenglykol, 1,4-Butandiol, 1,5-Pentandiol und 1,6-Hexandiol.

Eingesetzt werden können ferner Polyesterpolyole aus Lactonen, beispielsweise ε-Caprolacton oder Hydroxycarbonsäuren z.B. ω-Hydroxycapronsäure.

Zur Herstellung der Polyesterpolyole können die organischen z.B. aromatischen und vorzugsweise aliphatischen Dicarbonsäuren und/oder deren Derivate und die mehrwertigen Alkohole und/oder Alkylenglykole katalysatorfrei oder vorzugsweise in Gegenwart von Veresterungskatalysatoren, zweckmäßigerweise in einer Atmosphäre aus Inertgasen, wie z.B. Stickstoff, Helium, Argon u.a. in der Schmelze bei Temperaturen von 150 bis 250°C vorzugsweise 180 bis 220°C gegebenenfalls unter vermindertem Druck bis zu der gewünschten Säurezahl, die vorteilhafterweise kleiner als 10, vorzugsweise kleiner als 2 ist, polymerisiert werden.

Gemäß einer bevorzugten Ausfiihrungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln wie z.B. Benzol, Toluol, Xylol oder Chlorbenzol, zur azeotropen Abdestillation des Kondensationswassers durchgeführt werden.

Zur Herstellung der Polyesterpolyole werden die organischen Dicarbonsäuren und/oder deren Derivate und die mehrwertigen Alkohole vorteilhafterweise im Molverhältnis von 1:1 bis 1,8, vorzugsweise 1:1,05 bis 1,2, polykondensiert. Die erhaltenen Polyesterpolyole weisen vorzugsweise eine Funktionalität von 2 bis 4, insbesondere 2 bis 3, und eine Hydroxylzahl von 20 bis 140, vorzugsweise 20 bis 40 auf.

Bevorzugt weist das Polyesterpolyol eine Viskosität gemessen nach DIN 53015 bei einer Temperatur von 25 °C im Bereich zwischen 200 und 30000 mPa.s, besonders bevorzugt im Bereich zwischen 200 und 20000 mPa.s, ganz besonders bevorzugt im Bereich zwischen 200 und 10000 mPa.s, auf.

Als Polyhydroxylverbindungen werden ebenfalls bevorzugt Polyoxyalkylenpolyole verwendet, die nach bekanntem Verfahren hergestellt werden. Dies geschieht beispielsweise durch anionische Polymerisation mit Alkalihydroxiden, wie Natrium- oder Kaliumhydroxid, oder mit Alkalialkoholaten wie Natriummethylat, Natrium- oder Kaliummethylat oder Kaliumisopropylat, als Katalysatoren und unter Zusatz mindestens eines Startermoleküls, das 2 bis 8 vorzugsweise 2 bis 3 reaktive Wasserstoffatome gebunden enthält, zur Herstellung von Polyoxyalkylenpolyolen, oder durch kationische Polymerisation mit Lewis-Säuren, wie Antimonpentachlorid, Bortrifluorid-Etherat u.a. oder Bleicherde als Katalysatoren aus einem oder mehreren Alkylenoxiden mit 2 bis 4 Kohlenstoffatomen im Alkylenrest.

Erfindungsgemäß geeignete Alkylenoxide sind beispielsweise Tetrahydrofuran, 1,3-Propylenoxid, 1,2- bzw. 2,3-Butylenoxid und vorzugsweise Ethylenoxid und 1,2-Propylenoxid. Die Alkylenoxide können einzeln, alternierend nacheinander oder als Mischungen verwendet werden.

Als Startermoleküle werden bevorzugt Verbindungen ausgewählt aus der Gruppe bestehend aus Wasser, organische Dicarbonsäuren, wie Bernsteinsäure, Adipinsäure, Phthalsäure und Terephthalsäure, aliphatische und aromatische, gegebenenfalls N-mono, N,N- und N,N'-dialkylsubstituierte Diamine mit 1 bis 4 Kohlenstoffatomen im Alkylrest, wie gegebenenfalls mono- und dialkylensubstituiertes Ethylendiamin, Diethylentriamin, Triethylentetramin, 1,2-Propylenamin, 1,3- bzw. 1,4-Butylendiamin, 1,2-, 1,3-, 1,4-, 1,5- und 1,6 Hexamethylendiamin, Phenylendiamin, 2,3-, 3,4-, 2,4- und 2,6-Toluylendiamin und 4,4'-, 2,4'- und 2,2'-Diaminodiphenylmethan, Alkanolamin, wie z.B. Ethanolamin, N-Methyl- und N-Ethylethanolamin, Dialkanolamine, wie z.B. Diethanolamin, N-Methyl- und N-Ethyldiethanolamin und Trialkanolamine, wie z.B. Triethanolamin, und Ammoniak. Vorzugsweise verwendet werden mehrwertige, insbesondere zwei- bis achtwertige Alkohole und/oder Alkylenglykole wie z.B. Ethandiol, Propandiol-1,2 und -1,3, Diethylenglykol, Dipropylenglykol, Butandiol-1,4, Hexandiol-1,6, Glyzerin, Trimethylolpropan, Pentaerythrit, Sorbit und Sucrose sowie Mischungen aus mindestens zwei mehrwertigen Alkoholen.

Die Polyoxyalkylenpolyole, vorzugsweise Polyoxypropylen- und Polyoxypropylenpolyoxyethylenpolyole, weisen eine Funktionalität von 2 bis 8 und Hydroxylzahlen von 20 bis 500 auf.

Die Polyoxyalkylenpolyole können einzeln oder in Form von Mischungen verwendet werden. Ferner können sie mit Polymerpolyolen und/oder Polyesterpolyolen gemischt werden.

Bevorzugt weist das Polyetherpolyol eine Viskosität gemessen nach DIN 53015 bei einer Temperatur von 25 °C im Bereich zwischen 200 und 30000 mPa.s, besonders bevorzugt im Bereich zwischen 200 und 20000 mPa.s, ganz besonders bevorzugt im Bereich zwischen 200 und 10000 mPa.s, auf.

Als Polyhydroxylverbindungen werden ebenfalls bevorzugt Polymerpolyole verwendet. Polymerpolyole werden häufig auch als Graft-Polyole bezeichnet. Diese Polymerpolyole werden üblicherweise durch radikalische Polymerisation von geeigneten olefinischen Monomeren, beispielsweise Styrol, Acrylnitril, Acrylaten und/oder Acrylamid, in einem als Pfropfgrundlage dienenden Polyetherol hergestellt. Die Seitenketten entstehen im Allgemeinen durch Übertragung der Radikale von wachsenden Polymerketten auf Polyetherpolyole. Das Polymerpolyol enthält neben dem Propfcopolymerisaten überwiegend die Homopolymere der Olefine, dispergiert in unverändertem Polyetherol.

In einer bevorzugten Ausführungsform werden als Monomere Acrylnitril, Styrol, insbesondere Styrol und Acrylnitril im Verhältnis zwischen 1:1 bis 3:1, sowie gegebenenfalls in Gegenwart weiterer Monomerer, eines Makromers, eines Moderators und unter Einsatz eines Radikal-Initiators, meist Azo- oder Peroxidverbindungen, in einem Polyetherol bzw. Polyesterol als kontinuierlicher Phase hergestellt.

Als Trägerpolyetherole kommen üblicherweise Verbindungen mit einer Hydroxylgruppen-Funktionalität von 2 bis 8, vorzugsweise 2 bis 3, einer Hydroxylzahl von 20 bis 100 mg KOH/g, bevorzugt 25 bis 70 mg KOH/g, hergestellt durch anionische, kationische oder neutrale Polymerisation (DMC) von Alkylenoxiden, bevorzugt Ethylen- und/oder Propylenoxid in Betracht.

Makromere, auch als Stabilisatoren bezeichnet, sind lineare oder verzweigte Polyole mit zahlenmittleren Molekulargewichten von bis zu 2000 g/mol, die mindestens eine endständige, reaktionsfähige olefinische ungesättigte Gruppe enthalten. Die ethylenisch ungesättigte Gruppe kann über Reaktion mit Anhydriden (Maleinsäureanhydrid, Fumarsäure), Acrylat- und Methacrylat-Derivaten sowie Isocyanat-Derivaten, wie 3-Isopropenyl-1,1-dimethylbenzyl-isocyanate, Isocyanato-ethylmethacrylate, an ein bereits bestehendes Polyol eingefügt werden.

Während der radikalischen Polymerisation werden die Makromere mit in die Copolymerkette eingebaut. Dadurch bilden sich Blockcopolymere mit einem Polyether- und einem Poly-acrylnitrilstyrol-Block, welche in der Grenzfläche von kontinuierlicher Phase und dispergierter Phase als Phasenvermittler wirken und das Agglomerieren der Polymerpolyolpartikel unterdrücken. Der Anteil der Makromere beträgt üblicherweise 1 bis 15 Gew.-%, bezogen auf das Gesamtgewicht der zur Herstellung des Polymerpolyols eingesetzten Monomere.

Zur Herstellung von Polymerpolyolen werden üblicherweise Moderatoren, auch als Kettenüberträger bezeichnet, eingesetzt. Die Moderatoren verringern durch Kettenübertragung des wachsenden Radikals das Molekulargewicht der sich bildenden Copolymere, wodurch die Vernetzung zwischen den Polymermolekülen verringert wird, was die Viskosität und die Dispersionsstabilität sowie die Filtrierbarkeit der Polymerpolyole beeinflusst. Der Anteil der Moderatoren beträgt üblicherweise 0,5 bis 25 Gew.-%, bezogen auf das Gesamtgewicht der zur Herstellung des Polymerpolyols eingesetzten Monomere. Moderatoren, die üblicherweise zur Herstellung von Polymerpolyolen eingesetzt werden, sind Alkohole, wie 1-Butanol, 2-Butanol, Isopropanol, Ethanol, Methanol, Cyclohexan, Toulol, Mercaptane, wie Ethanthiol, 1-Heptanthiol, 2-Octanethiol, 1-Dodecanthiol, Thiophenol, 2-Ethylhexylthioglycolate, Methylthioglycolate, Cyclohexylmercaptan sowie Enoletherverbindungen, Morpholine und α-(Benzoyloxy)styrol.

Zur Initiierung der radikalischen Polymerisation werden üblicherweise Peroxid- oder AzoVerbindungen, wie Dibenzoyl-peroxide, Lauroylperoxide, t-Amylperoxy-2-ethylhexanoate, Di-t-butylperoxide, Diisopropyl peroxide carbonate, t-Butyl peroxy-2-ethylhexanoate, t-Butylperpivalate, t-Butylperneo-decanoate, t-Butylperbenzoate, t-Butyl percrotonate, t-Butyl perisobutyrate, t-Butylperoxy-1-methylpropanoate, t-Butylperoxy-2-ethylpentanoate, t-Butylperoxyoctanoate und Di-t-butylperphthalate, 2,2'-Azobis(2,4-dimethyl-valeronitrile), 2,2'-Azobisisobutyronitrile (AIBN), Dimethyl-2,2'-azobisisobutyrate, 2,2'-Azobis(2-methylbutyronitrile) (AMBN), 1,1'-Azobis(1-cyclohexanecarbonitrile), eingesetzt. Der Anteil der Initiatoren beträgt üblicherweise 0,1 bis 6 Gew.-%, bezogen auf das Gesamtgewicht der zur Herstellung des Polymerpolyols eingesetzten Monomere.

Die radikalische Polymerisation zur Herstellung von Polymerpolyolen wird aufgrund der Reaktionsgeschwindigkeit der Monomere sowie der Halbwertszeit der Initiatoren üblicherweise bei Temperaturen von 70 bis 150°C und einem Druck bis zu 20 bar durchgeführt. Bevorzugte Reaktionsbedingungen zur Herstellung von Polymerpolyolen sind Temperaturen von 80 bis 140°C bei einem Druck von Atmosphärendruck bis 15 bar.

Vorzugsweise enthalten die Polymerpolyole 1 bis 45 Gew.%, besonders bevorzugt 5 bis 30 Gew.-%, ganz besonders bevorzugt 15 bis 25 Gew.-% Füllstoffe.

Bevorzugt weist das Polymerpolyol eine Viskosität gemessen nach DIN 53015 bei einer Temperatur von 25 °C im Bereich zwischen 200 und 30000 mPa.s, besonders bevorzugt im Bereich zwischen 200 und 20000 mPa.s, ganz besonders bevorzugt im Bereich zwischen 200 und 10000 mPa.s, auf.

Bevorzugt weist das Polymerpolyol einen Gehalt an primären Hydroxylgruppen von ≥ 50 mol-% bis ≤ 100 mol-% auf.

Die Polymerpolyolkomponente kann beispielsweise hergestellt werden durch die Addition von Propylenoxid und Ethylenoxid an Glycerin als Startermolekül. Der Anteil von Propylenoxid kann vorteilhafterweise ≥ 80 bis ≤ 95 Gewichts-% und der Anteil an Ethylenoxid kann vorteilhafterweise ≥ 5 bis ≤ 20 Gewichts-% betragen. Der Anteil an primären Hydroxylgruppen im Polymerpolyol kann besonders bevorzugt auch in einem Bereich von ≥ 60 mol-% bis ≤ 80 mol-% liegen.

Die Dicke der Schicht aus Polyolverbindungen kann beispielsweise ≥ 10 µm bis ≤ 500 µm, vorzugsweise ≥ 20 µm bis ≤ 200 µm und besonders bevorzugt ≥ 25 µm bis ≤ 100 µm betragen.

Der Einsatz von Polyolverbindungen als Haftvermittler erlaubt Unterbrechungen bei der Produktion von Schaumstoff-Verbundelementen, ohne dass dadurch eine höhere Menge an Ausschuss produziert wird. Während konventionelle Haftvermittler auf Basis von 2-Komponentensystemen nach kurzer Zeit abreagiert sind, sind Polyolverbindungen in sich bzw. mit sich selber nicht reaktiv. Vorteilhafterweise kann daher die Produktion von Schaumstoff-Verbundelementen angehalten werden, sofern Probleme im Produktionsprozess auftreten, ohne dass große Mengen an Material verworfen werden müssen.

In Schritt C) wird auf die Polyolverbindung eine Polyurethan und/oder Polyisocyanurat umfassende Schaumstoffschicht aufgetragen. Auch dieses kann in einer kontinuierlichen Produktionsanlage geschehen. Diese Schicht kann zum Beispiel in einer Dicke von ≥ 2 cm bis ≤ 28 cm, von ≥ 3 cm bis ≤ 26 cm und vorzugsweise von ≥ 4 cm bis ≤ 24 cm vorliegen. Es können die Reaktionskomponenten erst unmittelbar vor dem Auftragen in einem Mischkopf vermischt werden und das zum Schaum führende Reaktionsgemisch unmittelbar auf die Polyolverbindung aufgetragen werden. Insbesondere der Einsatz von Polyisocyanurat oder überwiegend Polyisocyanurat umfassenden Schäumen ist vorteilhaft, da diese auch mit einem reduzierten Gehalt an Flammschutzmitteln gute Flammschutzeigenschaften besitzen.

Zur Herstellung der Schaumstoffschicht kommen die üblichen aliphatischen, cycloaliphatischen und insbesondere aromatischen Polyisocyanate zum Einsatz. Bevorzugt verwendet werden Toluylendiisocyanat (TDI), Diphenylmethandiisocyanat (MDI) und insbesondere Gemische aus Diphenylmethandiisocyanat und Polyphenylenpolymethylenpolyisocyanaten (Roh-MDI). Als Verbindungen mit mindestens zwei gegenüber Isocyanatgruppen reaktiven Wasserstoffatomen kommen im Allgemeinen solche in Frage, die zwei oder mehrere reaktive Gruppen ausgewählt aus OH-Gruppen, SH-Gruppen, NH-Gruppen, NH₂-Gruppen und CH-aciden Gruppen wie β-Diketo-Gruppen im Molekül tragen. Vorzugsweise eingesetzt werden Polyetherole und/oder Polyesterole, wobei Polyetherpolyole bevorzugt sind. Die Hydroxylzahl der verwendeten Polyetherole und/oder Polyesterole beträgt vorzugsweise 25 bis 800 mg KOH/g, die Molmassen sind im Allgemeinen größer als 400 g/mol.

Es ist möglich, dass die Schaumstoffschicht, wobei allgemein auch der Schaum der Schaumstoffschicht verstanden werden soll, eine Geschlossenzelligkeit von ≥ 85% bis ≤ 100%, vorzugsweise von ≥ 90% bis ≤ 100% aufweist, welche gemäß DIN ISO 4590 bestimmt werden kann. Weiterhin kann die Schaumstoffschicht einen mittleren Zelldurchmesser nach ASTM 3576-77 von ≥ 10 µm bis ≤ 600 µm, bevorzugt von ≥ 50 µm bis ≤ 400 µm, aufweisen.

Selbstverständlich können im erfindungsgemäßen Verfahren nach dem Schritt C) auf die Schaumstoffschicht eine weiteres Mal eine Polyolverbindung wie in Schritt B) und daran anschließend eine weitere Deckschicht wie in Schritt A) beschrieben aufgetragen werden. Man erhält dann ein beidseitig mit einer Deckschicht versehenes Schaumstoff-Verbundelement. Das Verfahren kann beispielsweise in einer konventionellen Doppelbandanlage durchgeführt werden. In einer Ausfiihrungsform des erfmdungsgemäßen Verfahrens umfasst das Material der Deckschicht Aluminium, Stahl, Bitumen, Papier, Mineral-Vliesstoffe, organische Fasern umfassende Vliesstoffe, Kunststoff-Platten, Kunststoff-Folien und/oder Holzplatten. Insbesondere bevorzugt ist es, wenn die Deckschicht Aluminium-Metall oder Stahl ist. Das Aluminium bzw. der Stahl können dabei beschichtet sein. Die erfindungsgemäß eingesetzten Polyolverbindungen führen zu einer besonders guten Haftung insbesondere zwischen Polyisocyanurat-Schaumstoff und Aluminium-Deckschicht oder Stahl-Deckschicht.

In einer weiteren Ausfiihrungsform des erfindungsgemäßen Verfahrens wird die Polyolverbindung auf die Deckschicht in einer Menge von ≥ 20 g/m² bis ≤ 50 g/m² aufgetragen. Dieses stellt gegenüber bekannten Verfahren eine Verringerung der benötigten Menge an Haftvermittler dar. Die Menge der auf die Deckschicht aufgetragenen Polyolverbindung kann auch in einem Bereich von ≥ 25 g/m² bis ≤ 35 g/m² liegen. Insgesamt ergibt sich hierbei also eine Materialersparnis.

In einer weiteren Ausführungsform des erfindungsgemäßen Verfahrens wird die Deckschicht nach dem Auftragen der Polyolverbindung und des Reaktionsgemisches zum Herstellen der Schaumstoffschicht auf eine Temperatur von ≥ 20 °C bis ≤ 70 °C, besonders bevorzugt von ≥ 40 °C bis ≤ 60 °C erwärmt. Durch das Erwärmen der Deckschicht wird die Reaktion der Polyolverbindung mit anderen Schichten beschleunigt und insgesamt eine festere Verbindung erhalten. Die Deckschicht kann vor dem Auftragen der Polyolverbindung auch besonders bevorzugt auf eine Temperatur von ≥ 45 °C bis ≤ 55 °C erwärmt werden.

In einer weiteren Ausführungsform des erfindungsgemäßen Verfahrens ist die Schaumstoffschicht erhältlich aus der Reaktion eines Polyisocyanate und wenigstens eine Verbindung ausgewählt aus der Gruppe bestehend aus Polyesterpolyolen und Polyetherpolyolen umfassenden Reaktionsgemisches, wobei im Reaktionsgemisch zu Beginn der Reaktion das molare Verhältnis von Isocyanatgruppen zu Hydroxylgruppen ≥ 1:1 bis ≤ 5:1 beträgt. Mit anderen Worten ausgedrückt, beträgt der Index dieser Reaktionsmischung 100 bis 500. Der Index kann auch ≥ 150 bis ≤ 350 oder ≥ 200 bis ≤ 300 betragen. Bei solchen Kennzahlen werden überwiegend Polyisocyanuratschäume erhalten, welche wie bereits ausgeführt mit geringeren Mengen an Flammschutzmitteln auskommen und durch das erfindungsgemäße Verfahren dennoch fest an Deckschichten, insbesondere Aluminiumdeckschichten, angebunden werden können. Der Polyisocyanuratschaumstoff ist vorzugsweise ein Hartschaumstoff, definiert anhand seiner Druckspannung bei 10% Stauchung beziehungsweise von ≥ 100 kPa bis ≤ 300 kPa. Diese Druckspannung oder Druckfestigkeit kann gemäß DIN 53421/DIN EN ISO 604 bestimmt werden. Sie kann auch in einem Bereich von ≥ 150 kPa bis ≤ 250 kPa oder von ≥ 180 kPa bis ≤ 280 kPa liegen.

In einer weiteren Ausführungsform des erfindungsgemäßen Verfahrens beträgt die Rohdichte der Schaumstoffschicht ≥ 25 g/l bis ≤ 48 g/l, besonders bevorzugt ≥ 35 g/l bis ≤ 45 g/l. Sie kann anhand der Norm ISO 845 bestimmt werden. Es ist auch möglich, dass die Rohdichte ganz besonders bevorzugt ≥ 37 g/l bis ≤ 42 g/l, noch weiter bevorzugt ≥ 39 g/l bis ≤ 40 g/l beträgt. Unabhängig davon ist es weiterhin auch möglich, dass die Schaumstoffschicht, wobei allgemein auch der Schaum der Schaumstoffschicht verstanden werden soll, eine Geschlossenzelligkeit von ≥ 85% bis ≤ 100%, vorzugsweise von ≥ 90% bis ≤ 100% auf, welche gemäß DIN ISO 4590 bestimmt werden kann. Weiterhin kann die Schaumstoffschicht einen mittleren Zelldurchmesser nach ASTM 3576-77 von ≥ 10 µm bis ≤ 600 µm, bevorzugt von ≥ 50 µm bis ≤ 400 µm, aufweisen.

Die vorliegende Erfindung betrifft weiterhin die Verwendung einer Polyolverbindung als Haftvermittler in der Herstellung von Schaumstoff-Verbundelementen. Details zu den Polyolverbindungen wurden bereits vorstehend beschrieben, so dass hierauf in vollem Umfang Bezug genommen werden kann.

Ein weiterer Gegenstand der vorliegenden Erfindung ist ein Schaumstoff-Verbundelement, erhalten durch ein erfindungsgemäßes Verfahren, wobei die Haftfestigkeit zwischen der Deckschicht und der Schaumstoffschicht ≥ 0,20 N/mm² bis ≤ 1,00 N/mm², besonders bevorzugt ≥ 0,20 N/mm² bis ≤ 0,50 N/mm², ganz besonders bevorzugt ≥ 0,20 N/mm² bis ≤ 0,30 N/mm², beträgt. Insbesondere kann die Schaumstoffschicht hierbei eine Polyisocyanurat-Schaumstoffschicht sein. Die Haftfestigkeit wird hierbei vorteilhafterweise in Anlehnung an DIN 53292 gemessen. Im praktischen Einsatz wird eine untere Grenze von 0,20 N/mm² als kritische Grenze für eine ausreichende Haftfestigkeit angesehen.

### Beispiele

Die vorliegende Erfindung wird anhand der nachfolgenden Beispiele näher beschrieben werden.

Die Haftvermittlerzusammensetzung wurde auf ein auf 40 °C vorgewärmtes Aluminiumblech mit einer Vorrichtung, wie sie in EP 1 593 438 A2 beschrieben wird, aufgetragen. Die Menge an Haftvermittler betrug hierbei 50 g/m².

### Anschließend wurde hierauf ein Polyisocyanuratschaum aufgetragen mit folgender Zusammensetzung:

### A-Komponente:

39 Teile Polyetheresterol 1 aus Phthalsäureanhydrid, Diethylenglycol und Ethylenglycol mit einer Funktionalität von 2, einer Hydroxylzahl von 310 mg KOH/g. 15,7 Teile Polyetherol 1 aus Propylenglycol, Propylenoxid und Ethylenoxid mit einer Funktionalität von 2 und einer Hydroxylzahl von 28 mg KOH/g;
12 Teile Polyetherol 2 aus Zucker, Ethylenglycol und Propylenoxid mit einer Funktionalität von 3 und einer Hydroxylzahl von 380 mg KOH/g;
25 Teile Flammschutzmittel 1 (Trischlorisopropylphosphat, TCPP);
5 Teile Stabilisator 1 (silikonhaltiger Stabilisator);
3,5 Teile Katalysator 1 (PIR-Katalysator, Salz einer Carbonsäure);
2,5 Teile Polyesterol 1 (aus Phthalsäureanhydrid und Diethylenglycol);
2,5 Teile Katalysator 2 (aminhaltiger Polyurethankatalysator);
Treibmittel 1 (n-Pentan), Treibmittel 2 (Wasser);

### B-Komponente:

### Desmodur 44V70L (polymeres MDI, erhältlich von Bayer Material Science AG)

Es wurde die Haftfestigkeit in Anlehnung an die Norm DIN 53292 überprüft. Die Durchführung unterscheidet sich dabei vom Zugversuch senkrecht zur Deckschichtebene nach DIN 53292-82 durch die unterschiedliche Probendicke und Anzahl der Deckschichten. Beim Versuch nach DIN 53292-82 wird die gesamte Dicke der Deckschichten zugrunde gelegt. Dabei bestimmt der schwächste Bereich der Gesamtprobe den Bruchort. Demgegenüber erlaubt der Haftversuch in der hier beschriebenen Abwandlung eine seitenbezogene Beurteilung der Haftung.

Zur Probenentnahme wird daher ein Verbundelement senkrecht zu den Deckschichten geschnitten. Bei der Messung werden quadratische Proben verwendet, deren Seitenlänge 50 mm und deren Probenhöhe 15 mm (einschließlich der Deckschicht) beträgt.

Ebenfalls wurde die Blasenbildung nach Temperung bei 105 °C für 1 h überprüft.

## Patentansprüche

1. Verfahren zur Herstellung eines Schaumstoff-Verbundelements, umfassend die Schritte:
A) Bereitstellen einer Deckschicht;
B) Auftragen wenigstens einer Polyolverbindung auf die Deckschicht, und
C) Auftragen einer Polyurethan und/oder Polyisocyanurat umfassenden Schaumstoffschicht auf die Polyolverbindung.

2. Verfahren gemäß Anspruch 1, wobei das Material der Deckschicht Aluminium, Stahl, Bitumen, Papier, Mineral-Vliesstoffe, organische Fasern umfassende Vliesstoffe, Kunststoff-Platten, Kunststoff-Folien und/oder Holzplatten umfasst.

3. Verfahren nach Anspruch 1, wobei die Polyolverbindung eine Funktionalität von 2 bis 8 aufweist.

4. Verfahren nach Anspruch 1, wobei die Polyolverbindung eine Hydroxylzahl im Bereich von 15 bis 500 aufweist.

5. Verfahren nach einem oder mehreren der Ansprüche 1 bis 4, wobei die Polyolverbindung ausgewählt wird aus der Gruppe bestehend aus Polyesterpolyolen, Polyetherpolyolen und Polymerpolyolen.

6. Verfahren nach Anspruch 5, wobei das Polymerpolyol 1 bis 45 Gew.-% Füllstoffe bezogen auf das Polymerpolyol enthält.

7. Verfahren gemäß Anspruch 1, wobei die Polyolverbindung auf die Deckschicht in einer Menge von ≥ 20 g/m² bis ≤ 50 g/m² aufgetragen wird.

8. Verfahren gemäß Anspruch 1 wobei die Deckschicht vor dem Auftragen der Polyolverbindung auf eine Temperatur von ≥ 20 °C bis ≤ 70 °C erwärmt wird.

9. Verfahren gemäß Anspruch 1, wobei die Schaumstoffschicht erhältlich ist aus der Reaktion eines Polyisocyanate und wenigstens eine Verbindung ausgewählt aus der Gruppe bestehend Polyesterpolyolen und Polyetherpolyolen umfassenden Reaktionsgemisches, wobei im Reaktionsgemisch zu Beginn der Reaktion das molare Verhältnis von Isocyanat-Gruppen zu Hydroxyl-Gruppen ≥ 100:100 bis ≤ 400:100 beträgt.

10. Verfahren gemäß Anspruch 1, wobei die Rohdichte der Schaumstoffschicht ≥ 30 g/l bis ≤ 48 g/l beträgt.

11. Verwendung einer Polyolverbindung als Haftvermittler in der Herstellung von Schaumstoff-Verbundelementen.

12. Verwendung gemäß Anspruch 11, wobei die Polyolverbindung ausgewählt wird aus der Gruppe bestehend aus Polyesterpolyolen, Polyetherpolyolen und Polymerpolyolen.

13. Schaumstoff-Verbundelement, erhalten durch ein Verfahren gemäß Anspruch 1, wobei die Haftfestigkeit zwischen der Deckschicht und der Schaumstoffschicht ≥ 0,20 N/mm² bis ≤ 1,00 N/mm² beträgt.
